# EUROPEAN PATENT SPECIFICATION

(11) **EP 2 533 914 B1**
(45) Date of publication and mention of the grant of the patent: **12.06.2013**
(21) Application number: 11707202.5
(22) Date of filing: 10.02.2011
(51) Int. Cl.: B09C 1/02

(54) **METHOD AND SYSTEM FOR DECONTAMINATING SAND**
VERFAHREN UND SYSTEM ZUR DEKONTAMINATION VON SAND
PROCÉDÉ ET SYSTÈME DE DÉCONTAMINATION DE SABLE

(30) Priority: 10.02.2010 US 303024 P
(43) Date of publication of application: 19.12.2012
(73) Proprietor: M-I Drilling Fluids UK Limited, Aberdeen AB10 1UD (GB); Oilfield Mineral Solutions Limited, Newtongrange Edinburgh, EH22 4DG (GB)
(72) Inventor: McCOSH, Karen, Aberdeen AB10 6AL (GB); BENSON, Charles, West Horsley Surrey KT24 6JQ (GB); WILLIAMS, Steven, Mies 1295 (CH); KEATCH, Richard, AB34 4TT (GB); MAJID, Abs, Aberdeen AB11 6DB (GB); THOMSON, lain, Aberdeen AB12 3LW (GB)
(74) Representative: Gill, Stephen Charles
(86) International application number: PCT/GB2011/000178
(87) International publication number: WO 2011/098765

(56) References cited:
- WO-A1-02/13202
- WO-A1-03/065381

## Description

### Background of Invention

### Field of the Invention

Embodiments disclosed herein generally relate to systems and methods of processing contaminated sands. More specifically, embodiments disclosed herein relate to systems and methods for processing contaminated sands recovered from production waste pits. More specifically still, embodiments disclosed herein relate to systems and methods for separating hydrocarbons and naturally occurring radioactive material and removing calcium scale and calcium carbonate from contaminated sands recovered from production waste pits.

### Background Art

Oil-based sludges of various types and consistencies are commonly generated as waste streams during oil or other hydrocarbon production processes. These sludges arise during well tests and initial production, as a by-product waste stream of hydrocarbon production, and as tank bottom sediments. The basic components of sludges are hydrocarbon oils of various consistencies, water, and solids of an inorganic and organic nature. To dispose of the waste, sludge is often stored in open pits where it may be left for considerable time before being treated. The basic components of sludges are hydrocarbon oils of various consistencies, water, and solids of an inorganic and organic nature. Oil-based sludge typically refers to a complex water-in-oil emulsion stabilized by salts of organic compounds and fine solids. The oil phase contains a complex mixture of hydrocarbons of various consistencies including waxes and asphaltenes which may be solid or semisolid at ambient temperature.

Produced water may also have been added to waste pits. Produced water often includes radioactive material and carbonate scale. These materials can leach into the sand surrounding the pit thereby contaminating the sand underlying the waste pits.

Currently, treatment of sludge is a major operational cost for producers. Sludge is collected, stored, and then disposed of in tanks or delivered to a sludge pit. One challenge of sludge treating systems is that the recovery of marketable oil from the sludge is generally not cost-effective and thus not commercially viable. Due to wide variability in sludge composition, different sludge processing systems may be needed to optimize the processing of sludge for recovering oil of sufficient quality in a cost efficient manner. The quality of oil is frequently characterized by its Basic Sediment and Water (BS&W) content, in vol. %. The current marketable BS&W of recovered oil is less than about 2 vol. %. Furthermore, it is desirable to treat pit sludge to reduce the risk of contamination of the surrounding pit area, in accordance with increasingly strict environmental regulations, as well as decrease the overall waste volume, and ultimately to permit pit closure.

Underlying the sludge in the open pit is often sand that is contaminated with hydrocarbons, calcium carbonate and naturally occurring radioactive material (NORM). To close a pit site, it is desirable to remove the contaminants from the sand and return the decontaminated sand to the pit.

WO 02/13202 and WO 03/065381 propose a process for volume reduction of radioactive scale, and an apparatus for such volume reduction comprising a dissolver vessel, at least one anion exchange column, at least one cation exchange column, and recovery vessels.

### Summary

The present invention provides in a first aspect a method for treating contaminated sand from a production waste pit according to claim 1, and in a second aspect a system for treating contaminated sand from a production waste pit according to claim 12.

Other aspects and advantages of the claimed subject matter will be apparent from the following description and the appended claims.

### Description of the Drawings

Figure 1 is a schematic representation showing a system for separating hydrocarbons and naturally occurring radioactive material from contaminated sands recovered from production waste pits.

Figure 2 is a schematic representation showing a sub-system for pretreating contaminated sands.

Figure 3 is a schematic representation showing a sub-system for removing naturally occurring radioactive material from contaminated sands.

Figure 4 is a schematic representation showing a sub-system for recycling material used to remove naturally occurring radioactive material from contaminated sands.

Figure 5 is a schematic representation showing a sub-system for treating waste water used in the treatment of contaminated sands.

Figure 6 is a schematic representation of a calciner for pre-treatment of the sand.

### Detailed Description

Embodiments disclosed herein generally relate to systems and methods of processing contaminated sands. More specifically, embodiments disclosed herein relate to systems and methods for processing contaminated sands recovered from production waste pits. More specifically still, embodiments disclosed herein relate to systems and methods for separating hydrocarbons and naturally occurring radioactive material from contaminated sands recovered from production waste pits.

After treatment of an upper hydrocarbon layer of a production waste pit (not shown), underlying sand may be decontaminated. This layer of untreated contaminated sand may contain hydrocarbon, calcium carbonate and naturally occurring radioactive material (NORM), all of which should be removed to produce cleaned sand to backfill and close the pit site.

It is advantageous to reuse the material used to remove the NORM from the sand. By recycling the material, less material is required to treat the sand underlying a pit and, therefore, the costs associated with treating the sand are reduced. Further, reuse of the NORM dissolver reduces the volume of NORM waste generated. It is further advantageous to treat and reuse the water used throughout the process so that additional fresh water is not constantly added to the system. In addition to lowering costs by reducing the amount of fresh water required to treat a pit, contaminated water is not released to the environment.

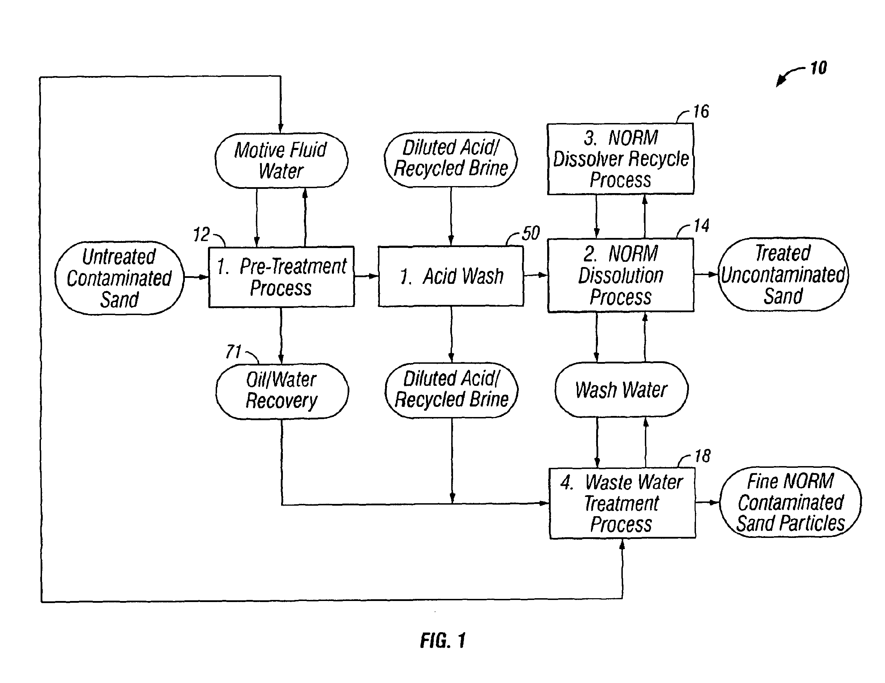

Referring to Figure 1, a schematic representation of a system 10 for separating hydrocarbons, carbonate, and naturally occurring radioactive material from contaminated sands recovered from production waste pits is shown. In this embodiment, the contaminated sand is subjected to a pre-treatment process 12 and a NORM dissolution process 14. The NORM solids are subjected to a NORM dissolver process 16, and the water used in the treatment is subjected to a water treatment process 18.

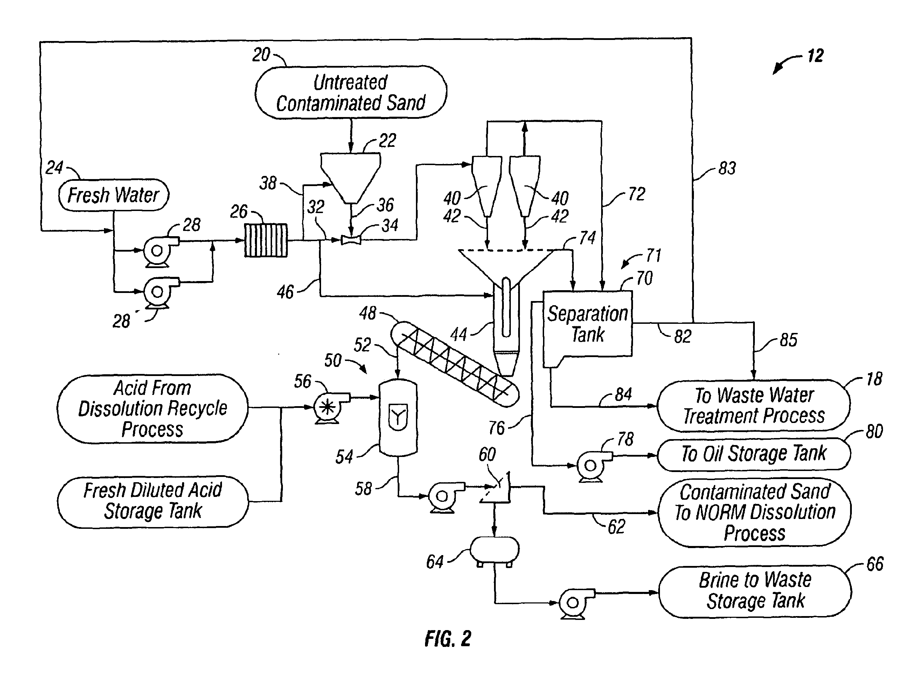

The pre-treatment process removes some non-radioactive components from the contaminated sand before subjecting the sand to the NORM dissolution process. In some embodiments, pre-treatment may include removing a hydrocarbon component from the contaminated sand, removing a calcium carbonate component from the sand, or both. Referring to Figures 1 and 2, the pre-treatment process 12 removes the hydrocarbon and calcium carbonate components from the sand. In some embodiments, a hot-water and/or chemical wash system removes the hydrocarbon component from the sand solids and a liquid-solid separation phase produces cleaned sand. Optionally, an oil-water separation phase 71 is used to clean the wash water and allow it to be recycled through the system, thereby minimizing the water consumption and waste water volume. In some embodiments, the pre-treatment process may also include a calcium carbonate removal stage. In one embodiment, the calcium carbonate removal stage is an acid wash system 50 to dissolve the calcium carbonate component of the inlet material thereby improving the efficiency of the downstream NORM dissolution processes. Alternatively, the calcium carbonate removal stage may include a calciner 600 used to convert the calcium carbonate into calcium oxide that can be removed from the sand by washing with water.

Contaminated sand 20 will be excavated from the pits and discharged into a feed hopper 22. The feed hopper 22 may have a top grating (not shown) with a large diameter mesh to remove foreign objects or large particles prior to entering the process stream. Water 24 is pumped through a heat exchanger 26 to increase the water's 24 temperature. A centrifugal pump 28 may be used to discharge the water 24 into the heat exchanger 26. A second centrifugal pump 28' may be included in the event that the first pump 28 is taken off line for maintenance or other reason. Other types of pumps may also be used to discharge the water 24 to the heat exchanger 26. In some embodiments, the temperature of the water 24 exiting the heat exchanger 26 is in the range of 60° to 95°C. In some embodiments, the temperature of the water 24 exiting the heat exchanger 26 is in the range of 75° to 85° C. In a preferred embodiment, the temperature of the water 24 exiting the heat exchanger 26 is approximately 80° C.

In circumstances where the concentration or quality of the hydrocarbon or the wettability of the sand particles 20 is such that hot water does not adequately remove the hydrocarbon from the sand 20, a chemical injection system (not shown) can be incorporated. In some embodiments, the chemical injection system may comprise a demulsifier and/or water wetting surfactant added to the sand 36 or the water 32.

A portion 32 of hot water passes through an eductor 34 or another type of mixing device, which is connected to the feed hopper 22. Where an eductor is used, the vacuum created by the wash water motive fluid 32 is sufficient to draw the contaminated sand 36 into the eductor 34. Another portion of wash water 38 is also injected into the hopper 22 to slurrify the untreated contaminated sand 20 for easier conveyance. The shear forces and chemical action are sufficient to separate the oil from the sand grains. The solution is then conveyed to a one or more hydrocyclones 40 where the solids and liquids are separated. The underflow 42 from the hydrocyclones 40 contains sand, NORM scale and any residual oil contamination. If additional hydrocarbon removal is required, in some embodiments the underflow 42 is discharged directly into Elutriation column 44. The sand particles settle through the Elutriation column 44 at the outer edge and a counter flow of a portion 46 of the hot wash water will further remove residual hydrocarbon from the particles. The water 46 is forced through a small diameter column resulting in a high upward flow at the centre of the column. At the column walls the flow rate is lower allowing the sand particles to settle. The wet, essentially hydrocarbon-free sand is conveyed via a screw conveyor 48 from the bottom of the Elutriation column 44 and enters the downstream acid-wash process 50. In an alternative embodiment, when additional hydrocabon removal is not required, sand from the hydrocyclones 40 may be fed directly to a calcium carbonate removal stage 50 or 600 or to the NORM dissolution process 14. In another alternative embodiment to the Elutriation column, the sand from the hydrocyclones 40 may be rinsed by spraying (not shown) with water.

In one embodiment of the pre-treatment step, the sand 52 from the screw conveyor 48, having been cleaned of hydrocarbon, now can be treated to dissolve any calcium carbonate (calcite) present. In some embodiments, a screw conveyor 48 transfers the sand 52 into an acid wash reactor 54. This reactor has been filled with an acid solution via pump 56. The source of the acid solution could be fresh acid or acidic solutions collected from the NORM recycling process, described below. In some embodiments, the fresh acid is a solution of hydrochloric acid. But, other acids that react with calcite to form a water soluble salt may be used, including for example carboxylic acids and mineral acids. The amount of acid may chosen based on the amount of calcite present in sand and amount of fluid required to create a slurry with the sand. In some embodiments, the solution is approximately 25% by weight hydrochloric acid. The acid reacts with the calcium carbonate and is neutralized to form a calcium chloride brine solution. The carbon dioxide produced is vented from the acid wash reactor 54. The sand solution 58 from reactor 54 then passes over a screen 60, such as a shaker, and the cleaned sand 62 is collected. The liquid phase passing though screen 60 is collected in a catch tank 64 and pumped to a waste storage tank 66.

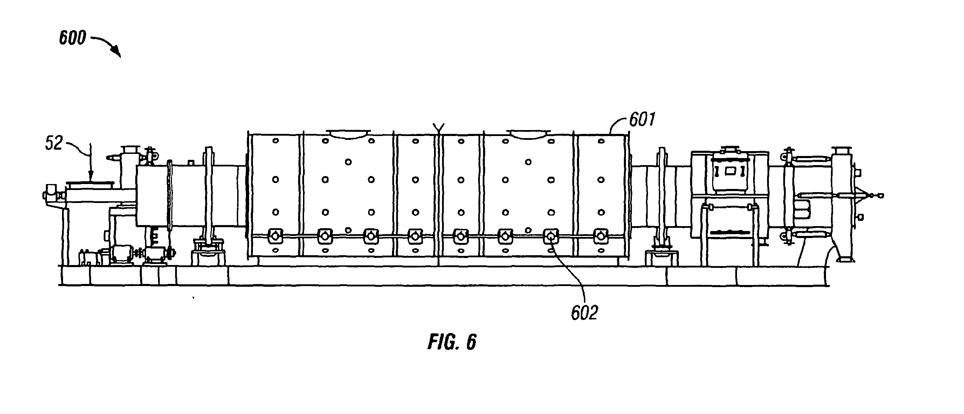

Referring now to Figs. 2 and 6, in another embodiment of the pretreatment step, the screw conveyor 48 transfers the sand 52 into a calciner vessel 600. In the calciner vessel 600, the sand 52 is subjected to temperatures in excess of 525° C. The calciner may comprise rotating furnace 601, which rotates the sand over burners 602 to heat the sand. In some embodiments the sand is heated in excess of 900° C. In still other embodiments, the sand is heated to over 1000° C. However, the temperate should not exceed the melting point of the metal mineral contaminants, such as lead sulphide (approximately 1114° C). During the calcining process, the calcium carbonate is converted to a water soluble calcium oxide. A water wash is then contacted with the heat-treated sand to wash away the calcium oxide from the sand. The water wash may be contacted with the heat-treated sand by any means known in the art, including spraying, mixing, or slurrying the water and sand. The washing process forms calcium hydroxide that can be separated from the sand as very fine particular suspension. Persons skilled in the art will readily understand that the separation of the calcium hydroxide containing water from sand can be performed by any number of separation techniques known in the art, including, for example, a settling tank, screening, or a hydrocyclone.

A separation tank 70 collects the overflow 72 from the hydrocyclones 40 and the overflow 74 from the Elutriation column 44. The oil and hydrocarbon phases separate under gravity in the separation tank 70. The oil phase 76 separated is pumped via a pump 78 to an oil storage tank 80 and the water phase 82 is recycled back via pumps 28, 28' via line 83. Any settled solids 84 collected at the base of separation tank 70 are pumped to the waste water treatment process 18. Once the wash water becomes overly contaminated with oil or particles that cannot be removed and recycling the wash water becomes detrimental to the process efficiency, the wash water 85 is pumped from the separation tank 70 to the waste water treatment process 18 and a fresh batch of wash water is prepared.

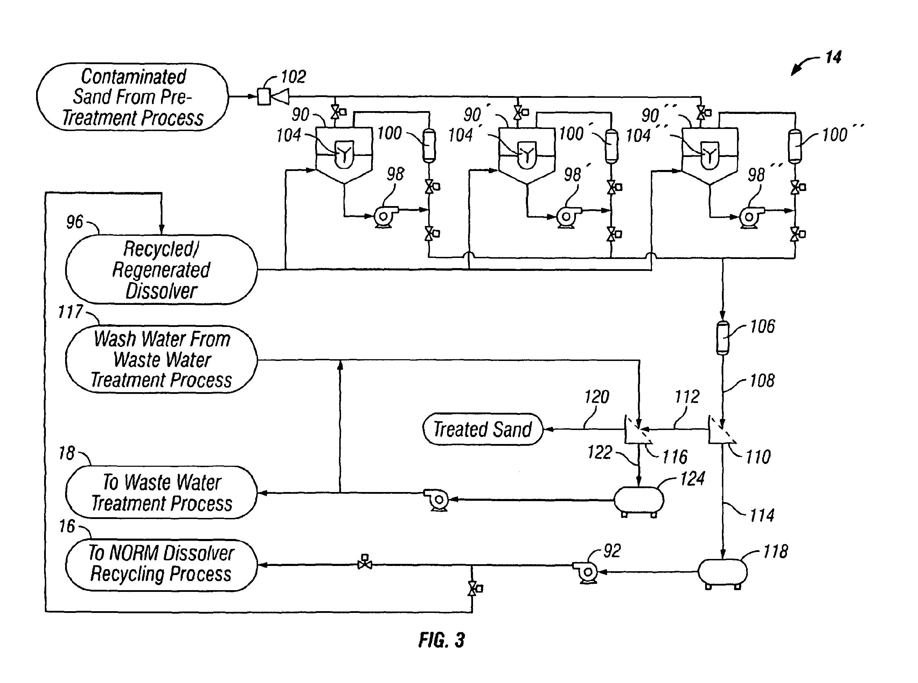

Referring to Figure 3, the cleaned sand 62 from the pre-treatment sub-process 12 is directed to the NORM dissolution sub-process 14. This stage of the process removes the NORM contamination from the sand, once the hydrocarbon component has been recovered and the calcium carbonate in the sand dissolved or otherwise removed by the calcium carbonate removal stage. The NORM dissolution step utilizes a chemical chelant to solubilise the NORM which can then be separated from the sand particles. The chelant can be re-used in the process until saturated after which it can be recycled in a downstream process. The chelant is also referred to herein as a dissolver chemical or a dissolver.

Exemplary chelating agents include polyaminocarboxylic acids, such as ethylenediaminetetraacetic acid (EDTA), diethylene triamine pentaacetic acid (DTPA), and nitrilotriacetic acid (NTA). In some embodiments, EDTA is the preferred chelating agent. The amount of chelating agent used may be based on the amount of NORM present in the contaminated sand and to reduce the amount of recycling of the dissolver that is necessary. Optionally, a converting agent may be combined with the chelating agent to assist with dissolving the NORM scale. The converting agent assists by converting barium sulphate on the surface of the sand particles to barium carbonate, which is more soluble than barium sulphate. This speeds up the overall dissolving of the NORM scale. One example of a suitable converting agents are carbonate salts (such as potassium carbonate). In some embodiments, the NORM dissolution process uses EDTA as the chelating agent and potassium carbonate as the converting agent.

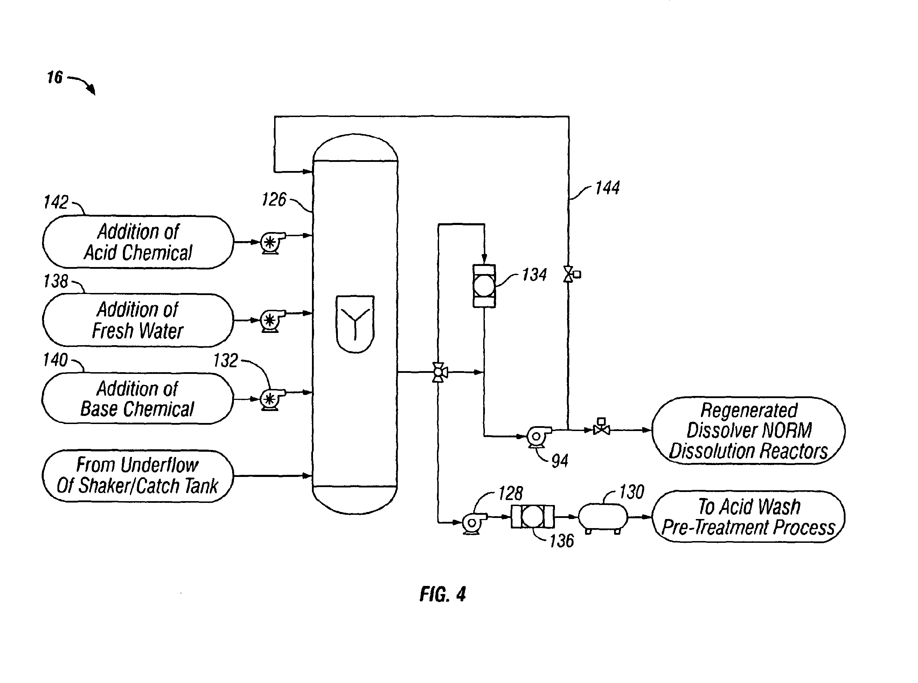

Each dissolution reactor 90, 90', 90" may be charged via one or more common centrifugal pumps 92, 94 (shown on Fig. 4) with dissolver chemical 96. The dissolver chemical 96 may be pumped out from the bottom of the reactor 90, 90' 90" via a dedicated pump 98, 98', 98", respectively. The dissolver chemical 96 may then be directed through a dedicated heat exchanger 100, 100', 100", respectfully, and back into the top of the reactor 90, 90', 90". The dissolver chemical may continue to circulate until a desired set point temperature is reached. In some embodiments the set point temperature of the dissolver chemical 96 is in the range of 60° to 95°C. In some embodiments the set point temperature of the dissolver chemical 96 is in the range of 75° to 85° C. In a preferred embodiment, the set point temperature of the dissolver chemical 96 is approximately 80° C.

The treated wet sand from the pre-treatment process 12 may be fed via a conveyance system into the dissolution reactors 90, 90', 90". In certain embodiments, the conveyance system is a pneumatic conveyance system 102, such as the ISO-PUMP^{™}, available from M-I LLC of Houston, Texas USA. Alternatively, the conveyance system may be an auger or other types of mechanical conveyers. In certain embodiments, the conveyance system will fill the dissolution reactors 90, 90', 90" over a period of about 1 hour per reactor tank. The fill time for each reactor 90, 90', 90" may be varied based upon the amount of sand being processed and the capacities of the pumps and blowers associated with pneumatic conveyance system 102. In some embodiments, each reactor 90, 90', 90" is charged with a ratio of up to and including 2:1 dissolver to sand. In some embodiments, each reactor 90, 90', 90" is charged with a ratio of more than 2:1 dissolver to sand. An agitator 104, 104', 104" located within each reaction vessel 90, 90', 90" helps to maintain uniform temperature distribution and mixes the dissolver and sand. Once the required mass of the wet sand has been discharged, the residence time in each reactor 90, 90', 90" can be recorded. The reaction time required will be determined by the level of NORM contamination and the sand particle size and will vary between batches. The reaction is the process of chelating the NORM to dissolve it, and the reaction time is the time required to dissolve the NORM. Throughout the reaction, the mixture may be continuously agitated and pumped to circulate through the reactor 90, 90', 90" and heat exchanger 100, 100', 100" to maintain the desired temperature set point range. The dissolution reactors 90, 90', 90" may be coated and pipelines may be lagged to reduce temperature loss during the reaction.

Once the reaction is complete, each reaction vessel 90, 90', 90" is discharged in series. The treated sand-dissolver mixture is pumped through a heat exchanger 106 to cool the mixture 108 to a mean temperature. This cooled mixture 108 flows through a solid/liquid separator 110 whereby the solids 112 are separated from the liquid phase 114 through a screen and the solid sand overflow 112 may be discharged over a secondary solid/liquid separator 116. The liquid phase 114 is collected in a catch tank 118 and recycled back to the reactors 90, 90', 90'' via a pump 92. If the liquid phase 114 is saturated with NORM then the dissolver chemical 96 will be transferred to the recycling process 16. At the second solid/liquid separator 116 water from a water wash system 117 assists to remove any residual dissolver solution from the solids and an overflow of cleaned and decontaminated sand 120 is produced. The wash water underflow 122 from the liquid/solid separator 116 is collected in catch tank 124 and re-used for further wash cycles or returned to the water treatment process 18.

Referring to Figure 4, once the dissolver chemical becomes saturated with NORM, it may be directed to the NORM dissolver recycling sub-process 16. The purpose of this process 16 is to remove the NORM material from the dissolver solution and to recycle the solution such that it can be used in another series of reactions. This recycling step serves to reduce chemical consumption and reduce the volume of NORM waste generated.

Saturated spent dissolver is pumped from one reaction vessel 90, 90', 90" into a dissolver regeneration vessel 126. Acid 142 is dosed into the dissolver regeneration vessel 126 to precipitate the NORM, the chelant, and other solids leaving a liquid brine phase. In some embodiments, the acid brings the pH down below 1, so a strong acid is preferred. However, in other embodiments a pH at or above 1 may also be effective to precipitate the chelating agent in its acid form. Hydrochloric acid is the preferred acid, but other acids may also be used to lower the pH and precipitate the chelating agent.

The solid precipitate settles to the base of the dissolver regeneration vessel 126 after which the liquid brine phase is pumped out via a pump 128. The brine directed through a filter 136 to remove any suspended solids. Nonregenerative filters may be used to remove suspended solids. The brine may then be pumped into a storage tank 130. In some embodiments, the acidified brine 130 may be used in the pre-treatment process 12 (Fig. 2) to dissolve calcite in the acid-wash process 50. The acidified brine 130 may be fed to the acid wash reactor 54 either alone, in combination with another acid source, or in combination with fresh acid.

Fresh water 138 may be pumped into the dissolver regeneration vessel 126 and a base 140 added. The base may be added via a metered pump 132. The base raises the pH and preferably utilizes an alkali metal hydroxide (such as sodium hydroxide or potassum hydroxide), carbonate (such as potassium carbonate), or bicarbonate. In some embodiments, the base is added to raise the pH to about 10-12. The solution is agitated to re-dissolve the chelant into solution. The NORM solid particles remain in suspension, but do not re-dissolve. The solution containing NORM solid particles is pumped through a two stage filtration system 134, the first filtration stage removing coarse NORM particles, and the second filtration stage removing finer NORM particles. Once all the NORM particles have been removed, the liquid phase 144 is returned to the dissolver regeneration vessel 126. Base 140 and water 138 is added to reconstitute the dissolver chemical such that it can now be re-used and re-fill the NORM dissolution reactor vessels 90, 90', 90".

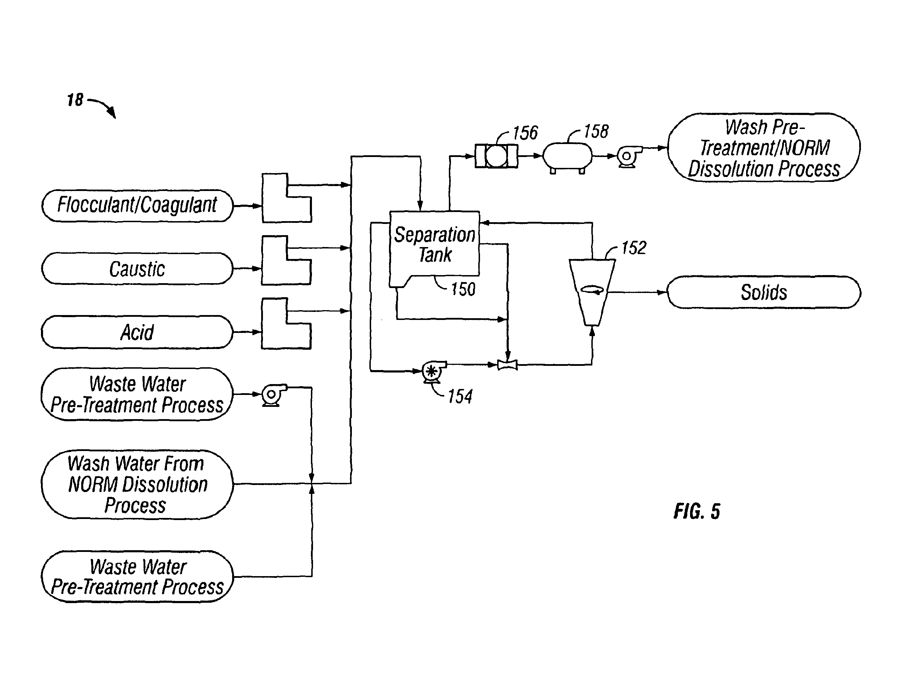

Referring to Figure 5, several of the upstream processes involve water based solutions. Although recycle loops and treatment are incorporated in the upstream processes, ultimately the water may become contaminated to a level where a secondary waste water treatment system 18 is required. To treat the waste water from multiple processes, each waste water stream is pumped into a separation tank 150. Water will pass under a baffle plate (not shown) and discharge over a weir (not shown) into a water trough (not shown). Chemicals (coagulant, flocculant and pH adjustment) may be injected into the water trough as the flow exits the separation tank 150. The coagulants and flocculants for this process may be any known water treatment coagulants and flocculants, including organic and inorganic materials, such as aluminium sulphate, iron sulphate, poly acrylamide, and polyDADMAC. The water is discharged into the first of two compartments in a water treatment tank. An agitator (not shown) will further disperse the chemicals in the water as the water enters the first compartment. Flocs are formed and settle down the sloped tank bottom to a suction point where it may be pumped to separator 152, such as a decanter centrifuge. Any floating flocs and residual floating oil in separation tank 150 may be removed from the surface by a suction tube placed slightly underneath the surface. This slurry may also be pumped to the separator 152 for dewatering.

A baffle plate and overflow weir may direct the water into the second compartment of the tank 150 where the remaining flocs are removed. A series of baffle plates extending about 3/4 of the tank width allows for more settling time, also a gap between the sloped bottom and the baffle plates allows solids to settle and flow towards the suction point for the feed pump 154 to separator 152. The separator 152 receives the flocs from three different suction points at the bottom of the settling tank 150 and the dewatered overflow from the separator 152 will discharge back to the settling tank 150 and make the separation process a closed loop. A small water compartment in the end corner of the tank 150 will receive the separator overflow as well as additional water from the settling tank to make up for any limited separator capacity. The clean water supply from this compartment will be pumped back to the various processes via a filter 156 and buffer tank 158.

Many of the embodiments disclosed herein have the advantage of 24 hour operation.

While the claimed subject matter has been described with respect to a limited number of embodiments, those skilled in the art, having benefit of this disclosure, will appreciate that other embodiments can be devised which do not depart from the scope of the claimed subject matter as disclosed herein. Accordingly, the scope of the claimed subject matter should be limited only by the attached claims.

## Claims

1. A method for treating contaminated sand from a production waste pit, the method comprising the steps of:
pre-treating the contaminated sand to remove one or more non-radioactive materials;
washing the contaminated sand with a dissolver solution and water to remove naturally occurring radioactive material from the sand;
recovering the dissolver solution from the sand; and
collecting the treated sand;
wherein the pre-treating step comprises:
directing the contaminated sand into a feed hopper;
heating water;
directing a portion of the heated water into the feed hopper;
slurrying the water and the contaminated sand in the hopper;
directing the slurry to a hydrocyclone; and
directing an underflow of the hydrocyclone to an Elutriation column to remove hydrocarbon from the sand.

2. The method of claim 1, further comprising the step of regenerating the dissolver solution.

3. The method of claim 2, wherein the step of regenerating the dissolver solution further comprises:
pumping dissolver solution into a dissolver regeneration vessel;
dosing acid into the dissolver regeneration vessel;
precipitating naturally occurring radioactive material and other solids from the dissolver solution;
removing brine from the dissolver regeneration vessel; and
pumping fresh water and a base into the dissolver regeneration vessel to reconstitute the dissolver solution.

4. The method of claim 1, wherein the heating water step further comprises heating the water to approximately 80 degrees C.

5. The method of claim 1 or 4, wherein the pre-treatment step further comprises:
treating the sand from the Elutriation column with acid to dissolve any calcium carbonate.

6. The method of claim 1 or 4, wherein the pre-treatment step further comprises:
heating the sand from the Elutriation column to convert calcium carbonate to calcium oxide;
contacting the heat-treated sand with water; and
separating the heat-treated sand from the water.

7. The method of any one of the previous claims, wherein the washing the contaminated sand step comprises:
directing cleaned sand from the pre-treating step to a dissolution reactor;
heating a dissolver chemical;
pumping the dissolver chemical into the dissolution reactor;
reacting the dissolver chemical and the sand; and
separating the sand from a liquid component including spent dissolver fluid; and wherein optionally the ratio of dissolver chemical to sand is 2:1.

8. The method of any one of the previous claims wherein the step of pre-treating the contaminated sand further comprises:
contacting the contaminated sand with an acid solution to dissolve calcium carbonate.

9. The method of any one of claims 1 to 7 wherein the step of pre-treating the contaminated sand further comprises:
heating the contaminated sand to convert calcium carbonate to calcium oxide;
contacting the heat-treated sand with water; and
separating the heat-treated sand from the water.

10. The method of any one of the previous claims further comprising the step of:
treating waste water to remove contaminates.

11. The method of any one of the previous claims wherein the dissolver solution comprises a chelating agent

12. A system for treating contaminated sand from a production waste pit, the system comprising:
a hopper (22) within which the contaminated sand and heated water are slurried;
a hydrocyclone (40) receiving the slurried sand, the hydrocyclone separating the sand from a water component;
an Elutriation column (44) receiving sand from the hydrocyclone, the Elutriation column removing hydrocarbon from the sand;
a calcium carbonate removal stage receiving the sand from the Elutriation column;
a reactor (90, 90', 90") receiving the sand from the calcium carbonate removal stage, wherein the sand and a dissolver solution are reacted within the reactor to remove naturally occurring radioactive material from the sand;
a dissolver regeneration vessel (126) within which the spent dissolver solution from the reactor and a brine are mixed;
a dosing pump for adding acid to the dissolver regeneration vessel; and
a dosing pump (132) for adding base to the dissolver regeneration vessel.

13. The system of claim 12 wherein the calcium carbonate removal stage comprises a vessel (54) in which an acid contacts the sand.

14. The system of claim 12 wherein the calcium carbonate removal stage comprises:
a furnace (601) in which the sand is heat-treated;
a washing stage in which the heat-treated sand is contacted with water; and
a separator in which the heat-treated sand is separated from the water.

15. The system of any one of claims 12 to 14 further comprising a separation tank (150) for treating waste water from the hydrocyclone and dissolver regeneration vessel.

## Patentansprüche

1. Verfahren zur Behandlung von kontaminiertem Sand aus einer Produktionsabfallgrube, wobei das Verfahren folgende Schritte umfasst:
Vorbehandeln des kontaminierten Sandes, um ein oder mehrere nicht-radioaktive Materialien zu entfernen;
Waschen des kontaminierten Sands mit einer Auflöserlösung und Wasser, um natürlich vorkommendes radioaktives Material aus dem Sand zu entfernen;
Entfernen der Auflöserlösung aus dem Sand; und
Gewinnen des behandelten Sands;
wobei der Vorbehandlungsschritt Folgendes umfasst:
Zuführen des kontaminierten Sands zu einem Beschickungstrichter;
Erhitzen von Wasser;
Zuführen einer Portion des erhitzten Wassers zu dem Beschickungstrichter;
Aufschlämmen des Wassers und des kontaminierten Sands im Beschickungstrichter;
Zuführen der Aufschlämmung zu einem Hydrozyklon; und
Zuführen des Unterlaufs des Hydrozyklons zu einer Elutriationssäule, um Kohlenwasserstoff aus dem Sand zu entfernen.

2. Verfahren nach Anspruch 1, das weiters den Schritt des Regenerierens der Auflöserlösung umfasst.

3. Verfahren nach Anspruch 2, wobei der Schritt des Regenerierens der Auflöserlösung weiters Folgendes umfasst:
Pumpen der Auflöserlösung in einen Auflöserregenerierungsbehälter;
Dosieren von Säure in den Auflöserregenerierungsbehälter;
Ausfällen von natürlich vorkommendem radioaktivem Material und von anderen Feststoffen aus der Auflöserlösung;
Entfernen von Kochsalzlösung aus dem Auflöserregenerierungsbehälter; und
Pumpen von frischem Wasser und einer Base in den Auflöserregenerierungsbehälter, um die Auflöserlösung wiederherzustellen.

4. Verfahren nach Anspruch 1, wobei der Wassererhitzungsschritt weiters das Erhitzen des Wassers auf etwa 80 °C umfasst.

5. Verfahren nach einem der Ansprüche 1 oder 4, wobei der Vorbehandlungsschritt weiters Folgendes umfasst:
Behandeln des Sands aus der Elutriationssäule mit Säure, um jegliches Calciumcarbonat zu lösen.

6. Verfahren nach einem der Ansprüche 1 oder 4, wobei der Vorbehandlungsschritt weiters Folgendes umfasst:
Erhitzen des Sands aus der Elutriationssäule, um Calciumcarbonat in Calciumoxid zu überführen;
Kontaktieren des wärmebehandelten Sands mit Wasser; und
Trennen des wärmebehandelten Sands vom Wasser.

7. Verfahren nach einem der vorangegangenen Ansprüche, wobei das Waschen des kontaminierten Sands folgende Schritte umfasst:
Zuführen von gereinigtem Sand aus dem Vorbehandlungsschritt zu einem Auflösungsreaktor;
Erhitzen einer Auflöserchemikalie;
Pumpen der Auflöserchemikalie in den Auflösungsreaktor;
Umsetzen der Auflöserchemikalie mit dem Sand; und
Trennen des Sands von einem flüssigen Bestandteil, einschließlich verbrauchter Auflöserflüssigkeit; und
wobei das Verhältnis zwischen Auflöserchemikalie und Sand gegebenenfalls 2:1 ist.

8. Verfahren nach einem der vorangegangenen Ansprüche, wobei der Schritt des Vorbehandelns des kontaminierten Sands weiters Folgendes umfasst:
Kontaktieren des kontaminierten Sands mit einer Säurelösung, um Calciumcarbonat aufzulösen.

9. Verfahren nach einem der Ansprüche 1 bis 7, wobei der Schritt des Vorbehandelns des kontaminierten Sands Folgendes umfasst:
Erhitzen des kontaminierten Sands, um Calciumcarbonat in Calciumoxid überzuführen;
Kontaktieren des wärmebehandelten Sands mit Wasser; und
Trennen des wärmebehandelten Sands vom Wasser.

10. Verfahren nach einem der vorangegangenen Ansprüche, das weiters folgenden Schritt umfasst:
Behandlung von Abwasser zur Entfernung von Kontaminanten.

11. Verfahren nach einem der vorangegangenen Ansprüche, wobei die Auflöserlösung einen Chelatbildner umfasst.

12. System zur Behandlung von kontaminiertem Sand aus einer Produktionsabfallgrube, wobei das System Folgendes umfasst:
einen Trichter (22), in dem der kontaminierte Sand und erhitztes Wasser aufgeschlämmt werden;
einen Hydrozyklon (40), der den aufgeschlämmten Sand aufnimmt, wobei der Hydrozyklon den Sand von einem Wasserbestandteil trennt;
eine Elutriationssäule (44), die Sand aus dem Hydrozyklon aufnimmt, wobei die Elutriationssäule Kohlenwasserstoff vom Sand trennt;
einen Calciumcarbonatentfernungsabschnitt, der den Sand aus der Elutriationssäule aufnimmt;
einen Reaktor (90, 90', 90"), der den Sand aus dem Calciumcarbonatentfernungsabschnitt aufnimmt, wobei der Sand und eine Auflöserlösung im Reaktor umgesetzt werden, um natürlich vorkommendes radioaktives Material aus dem Sand zu entfernen;
einen Auflöserregenerierungsbehälter (126), in dem die verbrauchte Auflöserlösung aus dem Reaktor und eine Kochsalzlösung vermischt werden;
eine Dosierungspumpe zum Zusetzen von Säure zum Auflöserregenerierungsbehälter; und
eine Dosierungspumpe (132) zum Zusetzen einer Base zum Auflöserregenerierungsbehälter.

13. System nach Anspruch 12, wobei der Calciumcarbonatentfernungsabschnitt einen Behälter (54) umfasst, in dem eine Säure mit dem Sand in Kontakt kommt.

14. System nach Anspruch 12, wobei der Calciumcarbonatentfernungsabschnitt Folgendes umfasst:
einen Ofen (601), in dem der Sand wärmebehandelt wird;
einen Waschabschnitt, in dem der wärmebehandelte Sand mit Wasser kontaktiert wird; und
einen Separator, in dem der wärmebehandelte Sand vom Wasser getrennt wird.

15. System nach einem der Ansprüche 12 bis 14, das weiters einen Trennbehälter (150) zum Behandeln von Abwasser aus dem Hydrozykon und dem Auflöserregenerierungsbehälter umfasst.

## Revendications

1. Procédé de traitement de sable contaminé en provenance d'un puits à déchets de production, le procédé comprenant des étapes de :
prétraitement du sable contaminé pour retirer un ou plusieurs matériaux non radioactifs ;
lavage du sable contaminé avec une solution de dissolveur et d'eau pour retirer du sable des matériaux radioactifs naturellement présents ;
récupération de la solution de dissolveur du sable ; et
collecte du sable traité ;
dans lequel l'étape de prétraitement comprend des étapes de :
amener le sable contaminé dans une trémie d'alimentation ;
chauffage d'eau ;
amener une partie de l'eau chauffée dans la trémie d'alimentation ;
mise en suspension du sable contaminé dans l'eau au sein de la trémie ;
amener la suspension dans un hydrocyclone ; et
amener un sous écoulement de l'hydrocyclone dans une colonne d'élutriation pour retirer les hydrocarbures du sable.

2. Procédé selon la revendication 1, comprenant en plus une étape de régénération de la solution de dissolveur.

3. Procédé selon la revendication 2 dans lequel l'étape de régénération de la solution de dissolveur comprend en outre :
un pompage de la solution du dissolveur dans une cuve de régénération du dissolveur ;
un dosage d'un acide au sein de la cuve de régénération de dissolveur ;
une précipitation des matériaux radioactifs présents naturellement et d'autres solides dans la solution de dissolveur ;
un retrait de saumure de la cuve de régénération de dissolveur ;
un pompage d'eau fraiche et d'une base dans la cuve de régénération de dissolveur pour reconstituer la solution de dissolveur.

4. Procédé selon la revendication 1, dans lequel l'étape de chauffage d'eau comprend en outre le chauffage de l'eau à approximativement 80 degrés C.

5. Procédé selon la revendication 1 ou 4, dans lequel l'étape de prétraitement comprend en outre :
un traitement du sable de la colonne d'élutriation avec un acide pour dissoudre tout carbonate de calcium.

6. Procédé selon la revendication 1 ou 4, dans lequel l'étape de prétraitement comprend en outre :
un chauffage du sable de la colonne d'élutriation pour convertir le carbonate de calcium en oxyde de calcium ;
une mise en contact du sable chauffé avec de l'eau ; et
une séparation du sable chauffé de l'eau.

7. Procédé selon l'une des revendications précédentes, dans lequel l'étape de lavage du sable contaminé comprend des étapes de:
amener le sable nettoyer de l'étape de prétraitement vers un réacteur de dissolution ;
chauffage d'un produit chimique de dissolveur ;
pompage du produit chimique de dissolveur dans le réacteur de dissolution ;
réaction du produit chimique de dissolveur et du sable ; et
séparation du sable d'un composant liquide comprenant un fluide de dissolveur épuisé ; et dans lequel optionnellement le ratio de produit chimique de dissolveur et de sable est de 2 pour 1.

8. Procédé selon l'une quelconque des revendications précédentes, dans lequel l'étape de prétraitement du sable contaminé comprend en outre :
une mise en contact du sable contaminé avec une solution acide pour dissoudre le carbonate de calcium.

9. Procédé selon l'une des revendications 1 à 7 dans lequel l'étape de prétraitement du sable contaminé comprend en outre :
un chauffage du sable contaminé pour convertir le carbonate de calcium en oxyde de calcium ;
une mise en contact du sable chauffé avec de l'eau ; et
une séparation du sable chauffé de l'eau.

10. Procédé selon l'une quelconque des revendications précédentes comprenant en outre une étape de traitement de l'eau résiduaire pour retirer les contaminants.

11. Procédé selon l'une quelconque des revendications précédentes dans lequel la solution de dissolveur comprend un agent chélatant.

12. Système pour traiter du sable contaminé d'un puits à déchets de production, le système comprenant :
une trémie (22) dans laquelle le sable contaminé est mis en suspension dans de l'eau chaude ;
un hydrocyclone (40) pour recevoir le sable mis en suspension, l'hydrocyclone séparant le sable du composant eau ;
une colonne d'élutriation (44) recevant le sable depuis l'hydrocyclone, la colonne d'élutriation retirant les hydrocarbures du sable ;
un étage de retrait de carbonate de calcium recevant le sable de la colonne d'élutriation ;
un réacteur (90, 90', 90") recevant le sable de l'étage de retrait du carbonate de calcium dans lequel le sable et une solution de dissolveur sont mis en réaction au sein du réacteur pour retirer les matériaux radioactifs naturellement présent du sable ;
une cuve de régénération de dissolveur (126) dans laquelle la solution de dissolveur épuisée du réacteur et une saumure sont mélangées ;
une pompe de dosage pour ajouter de l'acide dans la cuve de régénération de dissolveur ; et
une pompe de dosage (132) pour ajouter une base dans la cuve de régénération du dissolveur.

13. Système selon la revendication 12, dans lequel l'étage de retrait du carbonate de calcium comprend une cuve (54) dans laquelle un acide est mis en contact avec le sable.

14. Système selon la revendication 12 dans lequel l'étage de retrait du carbonate de calcium comprend :
un four (601) dans lequel le sable est chauffé ;
un étage de lavage dans lequel le sable chauffé est mis en contact avec de l'eau ; et
un séparateur dans lequel le sable chauffé est séparé de l'eau.

15. Système selon l'une des revendications 12 à 14 comprenant en outre un réservoir de séparation (150) pour traiter l'eau résiduaire de l'hydrocyclone et de la cuve de régénération de dissolveur.
